# EUROPEAN PATENT APPLICATION

(11) **EP 4 086 870 A1**
(43) Date of publication of application: **09.11.2022**
(21) Application number: 21382418.8
(22) Date of filing: 07.05.2021
(51) Int. Cl.: G08B 25/12, G08B 17/10, G08B 17/103

(54) **FIRE PROTECTION SYSTEM**

(71) Applicant: Carrier Corporation, Palm Beach Gardens, FL 33418 (US)
(72) Inventor: MOIX OLIVÉ, Pere, Esplugues Llobregat, Barcelona 08950 (ES)
(74) Representative: Dehns

(57) **Abstract**

A manual call point and optical beam smoke detector are disclosed. The manual call point comprises a housing, a plurality of components located within the housing including a mechanism operable to trigger an alarm, and a self-regulating heater. The self-regulating heater is configured to maintain a constant temperature within the housing. The optical beam smoke detector comprises a housing having a window, a transmitter and/or a receiver located within the housing, and a heater located within the housing. The heater is configured to maintain a temperature difference between an interior of the housing and an exterior of the housing below a threshold temperature difference.

## Description

The present disclosure relates generally to components for a fire protection system, and in particular, to a manual call point (MCP) and an optical beam smoke detector.

Fire alarm activation can be achieved through the use of manual call points, which allow building occupants to signal that a fire or other emergency exists within the building by operating a mechanism (e.g. a pull-cord or button) of the manual call point.

In the European Union, the EN54-11 standard applicable to manual call points specifies an operating temperature range of about -20°C to about 70°C, although in some countries the standard can specify an operating temperature as low as -40°C. At low temperatures, the electronics and/or (mechanical) components of a manual call point can stop functioning, e.g. may become frozen, thereby preventing the activation of an alarm.

The operating temperature range of a manual call point (MCP) can be increased by using relatively expensive temperature resistant electronics and/or other components. Additionally or alternatively, the housing for the manual call point can be manufactured using relatively expensive temperature resistant materials, so as to better isolate the components and/or electronics from low temperatures.

Fire alarm activation can also be achieved by smoke detectors, such as optical beam smoke detectors. Optical beam smoke detectors typically include an optical transmitter and/or receiver located within a sealed housing having a window.

However, when the temperatures inside and outside the smoke detector housing differ, condensation can form on the window. This can have the effect of obscuring a signal from the transmitter from reaching the receiver, in a similar manner to the presence of smoke. In this way, condensation on the window can trigger a false alarm.

The Applicant believes there is scope for improvements to components for fire protection systems, and in particular to manual call points and optical beam smoke detectors.

### SUMMARY

According to a first aspect, there is provided a manual call point (MCP), comprising:
a housing;
a plurality of components located within the housing, wherein the plurality of components comprise a mechanism operable to trigger an alarm; and
a self-regulating heater, wherein the self-regulating heater is configured to maintain a temperature within the housing.

According to another aspect, there is provided a method of operating a manual call point (MCP) that comprises a plurality of components located within a housing, wherein the plurality of components comprise a mechanism operable to trigger an alarm, the method comprising:
using a self-regulating heater to maintain a temperature within the housing.

Various embodiments are directed to a manual call point comprising a housing, a plurality of (mechanical and/or electronic) components including a mechanism which may be operated by a user to trigger an (e.g. fire) alarm (such as a pull-cord, button, switch and/or frangible element), and a heater.

The heater can prevent the plurality of (mechanical and/or electronic) components of the manual call point from failing in low temperatures. This means, for example, that the heater can extend the range of operating temperatures of a (e.g. standard) manual call point. This means that the housing need not be manufactured using relatively expensive temperature resistant materials (so as to isolate the components of the manual call point from low temperatures), resulting in a reduced cost device. In addition or instead, the (mechanical and/or electronic) components themselves need not be relatively expensive temperature resistant components. Thus, the use of a heater can reduce the cost of manufacturing the manual call point.

Moreover, the heater is a self-regulating heater, such as, in particular, a positive temperature coefficient (PTC) heating cable, that may be configured to control and maintain a (stable) temperature within the housing. The use of a self-regulating heater to control the temperature within the housing has been found to be particularly suited to and beneficial for manual call points.

For example, a self-regulating heater can provide a particularly reliable and consistent heating of the interior of the manual call point (i.e. can operate to maintain a constant temperature) without, e.g. the need for complex electronics and/or an additional temperature sensor etc. This is in contrast to fixed resistance heaters, which cannot provide a constant temperature (without additional feedback and/or control electronics).

Furthermore a self-regulating heater, such as, in particular, a positive temperature coefficient (PTC) heating cable, may be operated, automatically, to draw only the current and/or power necessary to maintain a desired temperature, thereby reducing and/or optimising power consumption.

It will be appreciated, therefore, that various embodiments provide an improved manual call point.

The housing may define an interior of the manual call point.

The housing may comprise a front face, a back face and one or more (e.g. four) sidewalls. The front face, back face and one or more sidewalls may define the interior of the manual call point.

The housing may comprise a rigid housing. Alternatively, the housing may comprise a semi-rigid housing.

The housing may be formed from any suitable material or combination of materials. Suitable materials include plastic, such as polycarbonate-ABS ("PC-ABS") or glass reinforced polyester ("GRP"), and metal, such as stainless steel, etc. For example, the housing may comprise a plastic housing, a metal housing, or a housing comprising both plastic and metal. Metal is typically more resistant to changes in temperature (and so a metal housing can better isolate the components within the housing from changes in temperature), but is also typically more expensive than plastic.

The plurality of components may comprise one or more mechanical components and/or one or more electronic components. The plurality of components may comprise a mechanism operable to trigger an alarm, together with appropriate control electronics.

The mechanism may comprise any suitable mechanism that is operable to trigger an alarm, such as for example, a pull-cord, a (push) button, a lever or other switch.

The manual call point may further comprise a frangible element. The frangible element may be disposed on the housing (e.g. on a front face of the housing). The frangible element may be accessible to a user and may be operable by the user, e.g. during an (i.e. fire) emergency or test drill.

In various particular embodiments, the mechanism may comprise the frangible element. In these embodiments, the one or more mechanical components may comprise a switch. A (i.e. fire) alarm may be triggered when the switch is released. In various particular embodiments, the switch may be released when the frangible element is broken, e.g. by a user of the manual call point, e.g. during an (i.e. fire) emergency.

The housing may optionally further comprise a (e.g. transparent) cover. The cover may be hinged along one edge of the housing and the mechanism and/or frangible element may be accessed by pivoting the cover away from the housing. In this way, the cover may be configured to protect the mechanism and/or frangible element, e.g. so as to help to prevent the accidental triggering of false alarms.

The heater may be placed in any position or configuration suitable to distribute heat throughout the interior of the housing. Thus, the heater may (at least in part) be located within the housing.

The heater may be configured to maintain a desired temperature within the housing. The heater may be configured to maintain the temperature within the housing in a range of about: (i) 0°C to 10°C; (ii) 10°C to 20°C; (iii) 20°C to 30°C; (iv) 30°C to 40°C; or (v) 40°C to 50°C.

The heater may comprise a positive temperature coefficient ("PTC") heater, such as a positive temperature coefficient ("PTC") heating cable.

Thus, the heater may comprise a heating element, which may form part of a cable. The heater may be configured such that when a current passes through the heating element, the heating element (and so the cable) emits heat. The amount of heat emitted by the heating element may depend on (may be proportional to) the current passing through the heating element, e.g. a greater current may give rise to greater heat output.

The heating element may be formed from a positive temperature coefficient ("PTC") material. Thus, the heater may be configured such that the resistivity of the heating element decreases as the temperature of the heating element decreases. As such, the heater may be configured such that the resistivity of the heating element decreases as the temperature within the housing decreases. This causes the current flowing through the heating element to increase, and the heat output of the heater to increase.

Equally, the heater may be configured such that the resistivity of the heating element increases as the temperature of the heating element increases. As such, the heater may be configured such that the resistivity of the heating element increases as the temperature within the housing increases. This causes the current flowing through the heating element to decrease, and causes the heat output of the heater to decrease.

Thus, the heater may be configured to automatically adjust heat output in response to a change (increase or decrease) in temperature within the interior of the housing, i.e. so as to maintain the temperature within the housing at a (desired, constant) value.

The manual call point may further comprise a regulator. The regulator may be configured to supply the (heating element of the) heater with a voltage. The voltage supplied by the regulator will in effect set the heater to a desired operating temperature. For example, a greater supplied voltage will cause a greater current to flow and so a greater heat output. Thus, the regulator may be configured to control the set operating temperature of the heater by controlling the voltage supplied to the heater.

The regulator may be configured to supply the (heating element of the) heater with a constant voltage. This will mean that the heater will maintain a constant temperature within the housing.

The regulator may be configured to change the voltage supplied to the (heating element of the) heater so as to change the temperature of the heater (and to change the temperature within the housing). For example, the regulator may be configured to increase the voltage supplied to the (heating element of the) heater when it is desired to increase an operating temperature of the heater (and when it is desired to increase the temperature within the housing).

The regulator may be a buck boost regulator.

The regulator may be configured to limit the maximum current that flows through the heating element. This may protect the regulator and/or heater against overload or short-circuit.

In various particular embodiments, when the housing comprises a metal housing, the heater may be configured to heat the housing, e.g. by the cable being arranged to contact the metal housing. This may improve the distribution of heat throughout the interior of the housing.

The manual call point may further comprise a metal plate configured to protect the interior of the housing (i.e. from fire). A metal plate may be provided to improve the resistance of the manual call point to (i.e. fire) damage. In various particular embodiments, when the manual call point comprises the metal plate, the heater may be configured to heat the metal plate, e.g. by the cable being arranged to contact the metal plate. This may improve the distribution of heat throughout the interior of the housing.

According to an aspect, there is provided a fire protection system comprising a manual call point as described above.

The fire protection system may comprise a fire control panel and a plurality of fire protection modules connected to the fire control panel (where at least one of the plurality of fire protection modules is a manual call point configured as described above). The plurality of modules may each be connected to the fire control panel by wiring, optionally wherein the wiring has a loop configuration. The fire control panel may be configured to communicate with (and control) each module via the wiring. The plurality of modules may further comprise any one of a fire detector, a smoke detector, a heat detector, a manual call point, a fire alarm, a fire suppression component, a sprinkler, a fire barrier, and a smoke extractor.

The regulator and/or the heater may be powered by the fire protection system. For example, the fire protection system may be configured such that the (regulator and/or the heater of the) manual call point receives electrical power via the wiring.

Alternatively, the manual call point may comprise an internal (independent) power source, such as a battery, and the regulator and/or the heater may be powered by the internal power source.

According to a second aspect, there is provided an optical beam smoke detector, comprising:
a housing having a window;
a transmitter and/or a receiver located within the housing; and
a heater, wherein the heater is configured to maintain a temperature difference between an interior of the housing and an exterior of the housing below a threshold temperature difference.

According to another aspect, there is provided a method of operating an optical beam smoke detector that comprises a housing having a window, and a transmitter and/or a receiver located within the housing, the method comprising:
using a heater to maintain a temperature difference between an interior of the housing and an exterior of the housing below a threshold temperature difference.

Various embodiments are directed to an optical beam smoke detector comprising a housing having a window therein, a transmitter and/or receiver located within the housing, and a heater.

In various embodiments, the heater is configured to maintain a temperature difference between an interior of the housing and an exterior of the housing below a threshold temperature difference. This may beneficially prevent (or reduce) condensation forming on the window of the optical beam smoke detector. The use of a heater can therefore prevent (or reduce) false alarms due to condensation.

Moreover, the heater may be a self-regulating heater (e.g. a positive temperature coefficient ("PTC") heating cable), that may be configured to maintain a (stable) temperature within the housing. The use of a self-regulating heater to control the temperature within the housing has been found to be particularly suited to and beneficial for optical beam smoke detectors.

For example, a self-regulating heater can provide a particularly reliable and consistent heating of the interior of the smoke detector (i.e. can operate to maintain a constant temperature) without, e.g. the need for complex electronics and/or an additional temperature sensor etc. This is in contrast to fixed resistance heaters, which cannot provide a constant temperature (without additional feedback and/or control electronics).

Furthermore, a self-regulating heater, such as, in particular, a positive temperature coefficient (PTC) heating cable, may be operated, automatically, to draw only the current and/or power necessary to maintain a desired temperature, thereby reducing and/or optimising power consumption.

It will be appreciated, therefore, that various embodiments provide an improved optical beam smoke detector.

The housing may define the interior of the optical beam smoke detector.

The housing may be formed from any suitable material or combination of materials. Suitable materials include plastic, such as polycarbonate-ABS ("PC-ABS") or glass reinforced polyester ("GRP"), and metal, such as stainless steel, etc. For example, the housing may comprise a plastic housing, a metal housing, or a housing comprising both plastic and metal. Metal is typically more resistant to changes in temperature (and so a metal housing can better isolate components within the housing from changes in temperature), but is also typically more expensive than plastic.

The housing has at least one window therein. The window may be formed from any suitable material that is (at least partially) transparent (or translucent) to electromagnetic radiation (e.g. infra-red radiation). Suitable materials for the window include plastic, glass, crystal, etc.

In contrast, the housing may be formed from an opaque material. This may be such that electromagnetic radiation (e.g. infra-red radiation) can only enter (and leave) the interior of the housing via the window.

The optical beam smoke detector comprises either a transmitter (but no receiver), a receiver (but no transmitter), or both a transmitter and a receiver located within the housing.

Where only a transmitter (or only a receiver) is located within the housing, the complimentary receiver (or transmitter) of the optical beam smoke detector may be located in a separate housing. Thus, in embodiments, the optical beam smoke detector comprises: a first housing having a first window, and a transmitter located within the first housing; and a second housing having a second window, and a receiver located within the second housing.

In these embodiments, one or both of the housings (and windows) may be configured as described elsewhere herein. Equally, one or both of the housings may include a heater configured as described elsewhere herein.

Alternatively, the optical beam smoke detector may comprise a (single) housing having both the transmitter and the receiver located within that housing. In this case, the transmitter may be located adjacent to the receiver.

The transmitter and/or receiver may be located adjacent to the (or each respective) window.

The transmitter may be configured to transmit one or more signals, e.g. via the window(s) to the receiver. Similarly, the receiver may be configured to receive (the) one or more signals, e.g. via the window(s) from the transmitter. The one or more signals may comprise electromagnetic radiation such as infra-red ("IR") radiation. Thus, the transmitter may be configured to transmit electromagnetic (IR) radiation to the receiver via the window(s), and the receiver may be configured to receive the electromagnetic (IR) radiation from the transmitter via the window(s).

Where the transmitter and receiver are located in separate housings, the transmitter may be configured to transmit electromagnetic (IR) radiation to the receiver via the first and second windows, and the receiver may be configured to receive the electromagnetic (IR) radiation from the transmitter via the first and second windows.

Where the transmitter and the receiver are located in the same housing, the transmitter may be located adjacent to the receiver, and the optical beam smoke detector may further comprise a reflector configured to reflect the one or more signals (i.e. to reflect electromagnetic (IR) radiation). The transmitter may be configured to transmit electromagnetic (IR) radiation to the receiver via the window and the reflector, and the receiver may be configured to receive the electromagnetic (IR) radiation from the transmitter via the window and the reflector.

The optical beam smoke detector may be configured to trigger an (e.g. fire or smoke) alarm when the receiver is unable to receive the one or more signals from the transmitter. This may be the case when smoke prevents the receiver from receiving the one or more signals from the transmitter.

The heater may be placed in any position or configuration suitable to distribute heat throughout the interior of the housing. Thus, the heater may be located (at least in part) within the housing.

The heater may be configured to heat the housing to any desired temperature. The heater may be configured to heat the housing to a temperature of about: (i) -40°C to -30°C; (ii) -30°C to -20°C; (iii) -20°C to -10°C; (iv) -10°C to 0°C; (v) 0°C to 10°C; (vi) 10°C to 20°C; (vii) 20°C to 30°C; (viii) 30°C to 40°C; (ix) 40°C to 50°C; (x) 50°C to 60°C; or (xi) 60°C to 70°C.

The heater is configured to maintain a temperature difference between an interior of the housing and an exterior of the housing below a threshold temperature difference. The threshold temperature difference may be equal to or less than a temperature difference between the interior of the housing and the exterior of the housing at which condensation can occur.

For example, the threshold difference may be in a range of about: (i) 0°C to 2°C; (ii) 2°C to 4°C; (iii) 4°C to 6°C; (iv) 6°C to 8°C; or (v) 8°C to 10°C.

In particular embodiments, the heater is configured to heat the interior of the housing to the same temperature of the exterior of the housing. That is, the heater is configured to (attempt to) maintain the temperature difference between the interior of the housing and the exterior of the housing at or close to zero.

The heater may be configured to maintain the temperature difference below the threshold temperature difference by changing its heat output depending on the temperature external to the housing. Thus, the heater may be configured to increase its heat output when the external temperature increases, and to decrease its heat output when the external temperature decreases (and to maintain its heat output when the external temperature remains constant). This is done in such a way to maintain the temperature difference between the interior of the housing and the exterior of the housing below the threshold temperature difference, e.g. so as to (attempt to) maintain the difference at or close to zero.

In particular embodiments, the smoke detector comprises a temperature sensor. The temperature sensor may comprise any suitable temperature sensor, such as for example a thermocouple. The temperature sensor may be configured to measure the temperature of the environment external to the housing. To do this, the temperature sensor may be located external to the housing, such as being disposed on an exterior surface of the housing.

The heat output of the heater may be controlled or varied in response to an output of the temperature sensor. For example, the heater may be configured to increase its heat output when the output of the temperature sensor indicates that the temperature of the exterior of the housing has increased. Equally, the heater may be configured to decrease its heat output when the output of the temperature sensor indicates that the temperature of the exterior of the housing has decreased. The heater may be configured to maintain its heat output when the output of the temperature sensor indicates that the temperature of the exterior of the housing remains constant. This is done in such a way to maintain the temperature difference between the interior of the housing and the exterior of the housing below the threshold temperature difference, e.g. so as to (attempt to) maintain the difference at or close to zero.

The heater may comprise any suitable heater, but in particular embodiments is a self-regulating heater. The heater may comprise a positive temperature coefficient ("PTC") heater, such as a positive temperature coefficient ("PTC") heating cable.

Thus, the heater may comprise a heating element, which may form part of a cable. The heater may be configured such that when a current passes through the heating element, the heating element (and so the cable) emits heat. The amount of heat emitted by the heating element may depend on (may be proportional to) the current passing through the heating element, e.g. a greater current may give rise to greater heat output.

The heating element may be formed from a positive temperature coefficient ("PTC") material. Thus, the heater may be configured such that the resistivity of the heating element decreases as the temperature of the heating element decreases. This causes the current flowing through the heating element to increase, and causes the heat output of the heater to increase. Equally, the heater may be configured such that the resistivity of the heating element increases as the temperature of the heating element increases. This causes the current flowing through the heating element to decrease, and causes the heat output of the heater to decrease.

Thus, the heater may be configured to automatically adjust heat output in response to a change (increase or decrease) in temperature within the interior of the housing, i.e. so as to maintain the temperature within the housing at a desired (set-point) value (where the set-point temperature is set and/or varied depending on the output of the temperature sensor, as described above).

The smoke detector may further comprise a regulator. The regulator may be configured to supply the (heating element of the) heater with a voltage. The voltage supplied by the regulator will in effect set the heater to a desired operating temperature. For example, a greater supplied voltage will cause a greater current to flow and so a greater heat output. Thus, the regulator may be configured to control the set operating temperature of the heater by controlling the voltage supplied to the heater.

The smoke detector may be configured such that, when it is desired for the heater to maintain a constant temperature within the housing, the regulator supplies the (heating element of the) heater with a constant voltage. This will mean that the heater will maintain a constant temperature within the housing.

The smoke detector may be configured such that, when it is desired for the heater to change the temperature within the housing, the regulator changes the voltage supplied to the (heating element of the) heater so as to change the temperature of the heater. For example, the regulator may be configured to increase the voltage supplied to the (heating element of the) heater so as to increase the operating temperature of the heater (and so increase the temperature within the housing) and/or to decrease the voltage supplied to the (heating element of the) heater so as to decrease the operating temperature of the heater (and so decrease the temperature within the housing).

In particular embodiments, the smoke detector is configured to adjust the set-point temperature of the heater by (the regulator) adjusting the voltage supplied to the (heating element of the) heater in response to the output of the temperature sensor. That is, the voltage supplied by the regulator may be controlled or varied in response to the output of the sensor. For example, the regulator may be configured to increase the voltage when the output of the temperature sensor indicates that the temperature of the exterior of the housing has increased. Equally, the regulator may be configured to decrease the voltage when the output of the temperature sensor indicates that the temperature of the exterior of the housing has decreased. The regulator may be configured to maintain the voltage constant when the output of the temperature sensor indicates that the temperature of the exterior of the housing remains constant. This is done in such a way to maintain the temperature difference between the interior of the housing and the exterior of the housing below the threshold temperature difference, e.g. so as to (attempt to) maintain the difference at or close to zero.

The regulator may be a buck boost regulator.

The regulator may be configured to limit the maximum current that flows through the heating element. This may protect the regulator and/or heater against overload or short-circuit.

The smoke detector may further comprise a fan. The fan may be disposed within the housing of the smoke detector. The fan may be configured to distribute heat (e.g. evenly) throughout the housing by producing a flow of (heated) air throughout the housing. Thus, the fan may be configured to distribute air throughout the housing.

The provision of a fan has been found to be particularly advantageous for optical beam smoke detectors, since for example, the housing may have a relatively large volume, such that the heater by itself may not be capable of providing a uniform temperature distribution throughout the whole of the housing. The use of a fan is therefore particularly beneficial in providing a uniform temperature distribution throughout the interior of the housing, i.e. by generating air current(s) that distribute heat (e.g. evenly) throughout the housing.

According to an aspect, there is provided a fire protection system comprising a smoke detector as described above.

The fire protection system may comprise a fire control panel and a plurality of fire protection modules connected to the fire control panel (where at least one of the plurality of fire protection modules is an optical beam smoke detector configured as described above). The plurality of modules may each be connected to the fire control panel by wiring, optionally wherein the wiring has a loop configuration. The fire control panel may be configured to communicate with (and control) each module via the wiring. The plurality of modules may further comprise any one of a fire detector, a smoke detector, a heat detector, a manual call point, a fire alarm, a fire suppression component, a sprinkler, a fire barrier, and a smoke extractor.

The regulator, fan and/or the heater may be powered by the fire protection system. For example, the fire protection system may be configured such that the (regulator, fan and/or the heater of the) optical beam smoke detector receives electrical power via the wiring.

Alternatively, the optical beam smoke detector may comprise an internal (independent) power source, such as a battery, and the regulator, the fan and/or the heater may be powered by the internal power source.

Certain preferred embodiments will now be described, by way of example only, with reference to the following drawings, in which:
Fig. 1 shows schematically a fire protection system in accordance with various embodiments;
Fig. 2 shows schematically a manual call point in accordance with various embodiments;
Fig. 3 shows schematically an optical beam smoke detector system which may be configured in accordance with various embodiments;
Fig. 4 shows schematically an optical beam smoke detector in accordance with various embodiments; and
Fig. 5 shows schematically an optical beam smoke detector in accordance with various embodiments.

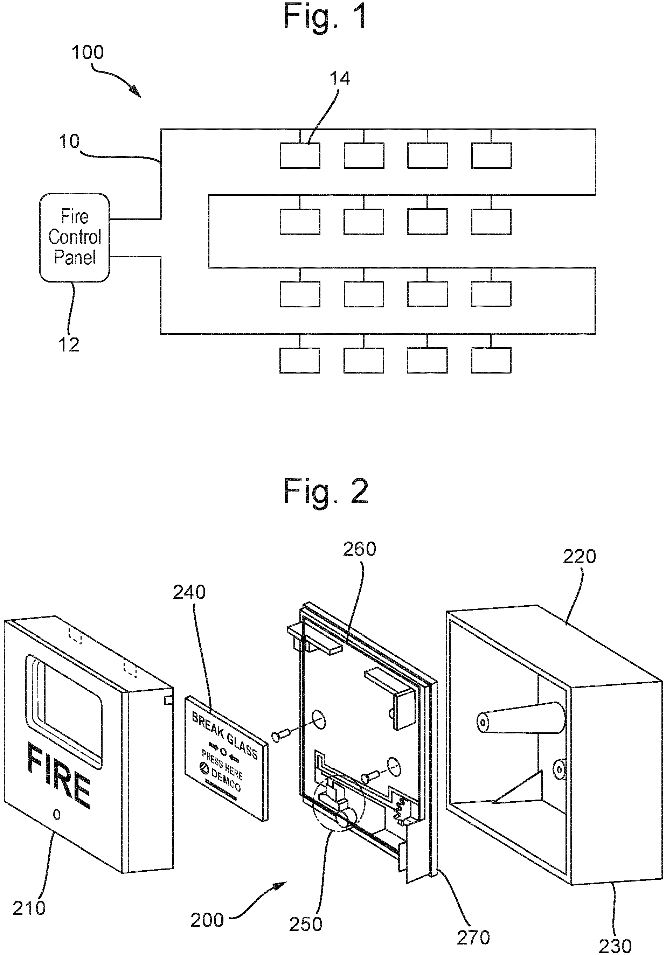

Figure 1 shows schematically a fire protection system 100 in accordance with various embodiments. As shown in Figure 1, the fire protection system 100 may comprise a fire control panel 12 and a plurality of modules 14 connected via wiring 10 to the fire control panel 12.

The plurality of modules 14 may include one or more fire detectors (such as one or more smoke and/or heat sensors), one or more manual call points, one or more fire alarms, one or more fire suppression systems (such as one or more sprinklers, fire barriers, smoke extractors, etc.), and the like.

The plurality of modules 14 of the fire protection system 100 may be electrically connected via wiring 10, for example in a loop configuration, with the connecting wiring 10 being connected to (for example, starting and finishing at) the fire control panel 12. The fire protection system 100 may be configured such that each module 14 receives electrical power from the fire control panel 12 via the wiring 10.

The fire protection system 100 may be configured such that the fire control panel 12 can communicate with (and control) each module 14, for example via the wiring 10.

Fig. 2 shows schematically a manual call point 200 in accordance with various embodiments. As shown in Fig. 2, the manual call point 200 comprises a housing. The housing may comprise a front face 210, a back face 220, and one or more (e.g. four) sidewalls 230.

The housing may be formed from any suitable material or combination of materials. Suitable materials include plastic, such as polycarbonate-ABS ("PC-ABS") or glass reinforced polyester ("GRP"), and metal, such as stainless steel, etc. For example, the housing may comprise a plastic housing, a metal housing, or a housing comprising both plastic and metal. Metal is typically more resistant to changes in temperature (and so a metal housing can better isolate the components within the housing from changes in temperature). It will be appreciated that this is particularly beneficial when it is desired to provide a manual call point that is resistant to fire damage (i.e. fireproof). However, metal is also typically more expensive than plastic.

As shown in Fig. 2, the manual call point 200 comprises a mechanism operable (by a user) to trigger an (i.e. fire) alarm, optionally together with appropriate control electronics. The mechanism may comprise any suitable mechanism that is operable to trigger an alarm, such as, for example, a pull-cord, (push) button, lever or other switch.

In addition to the mechanism, the manual call point 200 may comprise other components, such as one or more mechanical components and/or one or more electronic components.

In various particular embodiments, as shown in Fig. 2, the mechanism comprises a frangible element 240. The frangible element 240 may be disposed on the housing (e.g. on a front face 210 of the housing) and may be operable (i.e. broken) by a user, e.g. during an (i.e. fire) emergency to trigger an (i.e. fire) alarm.

As shown in Fig. 2, the one or more mechanical components may comprise a switch 250. A (i.e. fire) alarm may be triggered when the switch is released. In various particular embodiments, the switch 250 may be released when the frangible element is broken, e.g. by a user of the manual call point, e.g. during an (i.e. fire) emergency.

The housing may optionally further comprise a (e.g. transparent) cover (not shown). The cover may be hinged along one edge of the housing and the mechanism and/or frangible element 240 may be accessed by pivoting the cover away from the housing. In this way, the cover may be configured to protect the mechanism and/or frangible element 240, e.g. so as to help to prevent the accidental triggering of false alarms.

As shown in Fig. 2, the manual call point 200 comprises a self-regulating heater 260, such as a positive temperature coefficient ("PTC") heating cable. The heater 260 may comprise a heating element, which may form part of a cable. The heater 260 may be configured such that when a current passes through the heating element, the heating element (and so the cable) emits heat. The amount of heat emitted by the heating element may depend on (may be proportional to) the current passing through the heating element, e.g. a greater current may give rise to greater heat output.

The heating element may be formed from a positive temperature coefficient material, i.e. a material that exhibits a positive resistance change in response to an increase in temperature. As the temperature of the material increases, the resistivity of the material also increases, limiting the current flow. In other words, the material allows more current to flow at lower temperatures, and restricts current flow as the temperature increases. Beneficially, this allows the heater 260 to act as its own sensor, eliminating the need for any external feedback control.

In operation, self-regulating heaters initially draw full power to quickly heat up and reach a desired temperature. As the heat increases, the power consumption simultaneously drops.

It will therefore be appreciated that the heater 260 may be operated, automatically, to draw only the current or power necessary to maintain a desired temperature, thereby reducing and/or optimising power consumption.

As shown in Fig. 2, the heater 260 may be disposed (at least in part) within the housing and is configured to maintain a substantially constant temperature within the housing. For example, the heater 260 may be configured to automatically adjust heat output in response to a change (increase or decrease) in temperature within the interior of the housing, i.e. so as to maintain the temperature within the housing at a (desired, constant) value.

In various particular embodiments, when the housing comprises a metal housing, the heater 260 may be configured to heat the housing, e.g. by contacting the metal housing. This may improve the distribution of heat throughout the interior of the housing.

Additionally or alternatively, as shown in Fig. 2, the manual call point 200 may comprise a metal plate 270 disposed within the housing and configured to protect the interior of the housing (e.g. from fire damage). In these embodiments, the heater 260 may be configured to heat the metal plate 270, e.g. by contacting the metal plate 270.

In a similar manner to the metal housing, the metal plate 270 may improve the distribution of heat throughout the interior of the housing. Thus, it will be appreciated that in embodiments comprising the metal plate 270, the housing may be formed from a material other than metal (e.g. plastic).

In various embodiments, the manual call point 200 may further comprise a regulator (not shown). The regulator may be configured to supply the (heating element of the) heater 260 with a voltage.

It will be appreciated that the voltage supplied by the regulator will in effect set the heater 260 to a desired operating temperature. For example, a greater supplied voltage will cause a greater current to flow and so a greater heat output. Thus, the regulator may be configured to control the set operating temperature of the heater 260, i.e. by controlling the voltage supplied to the heater.

The regulator may be configured to supply the (heating element of the) heater 260 with a constant voltage. This will mean that the heater 260 will maintain a constant temperature within the housing.

The regulator may be configured to change the voltage supplied to the (heating element of the) heater 260 so as to change the temperature of the heater 260 (and to change the temperature within the housing). For example, the regulator may be configured to increase the voltage supplied to the (heating element of the) heater 260 when it is desired to increase an operating temperature of the heater 260 (and when it is desired to increase the temperature within the housing).

In various embodiments, the regulator may comprise a buck boost regulator. The buck boost regulator may be configured to regulate the output voltage of the regulator for input voltages to the regulator both above and below the magnitude of the output voltage.

Thus, the regulator may be configured such that the maximum output current of the regulator is dependent upon the input voltage to the regulator. In other words, higher input voltages to the regulator may yield a higher maximum output current of the regulator.

In various embodiments, the regulator may be configured to limit the maximum current that flows through the heating element. This may protect the regulator and/or heater 260 against overload or short-circuit.

The manual call point 200 may form part of a fire protection system, such as that shown in Fig. 1. In these embodiments, the regulator and/or the heater 260 may be powered by the fire protection system. For example, the fire protection system may be configured such that the (regulator and/or the heater 260 of the) manual call point 200 receives electrical power via the wiring of the fire protection system.

Alternatively, the manual call point 200 may comprise an internal (independent) power source, such as a battery, and the regulator and/or the heater 260 may be powered by the internal power source.

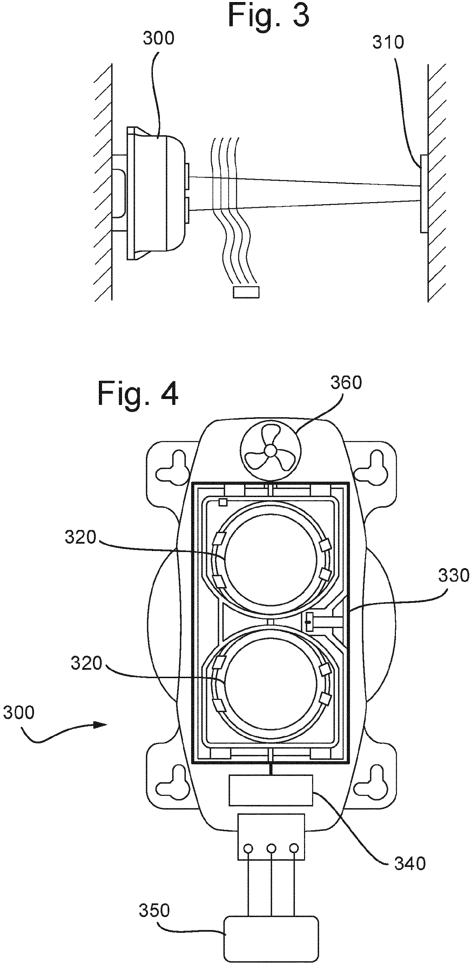

Fig. 3 shows schematically an optical beam smoke detector system. As shown in Fig. 3, the system may comprise an optical beam smoke detector 300 and a reflector 310. The smoke detector 300 may be disposed on a surface, such as a wall, and the reflector 310 may be disposed on an opposite surface, such as an opposite wall.

In various embodiments, the smoke detector 300 may comprise a (optical) transmitter and a receiver located within a housing having a window. In these embodiments, the smoke detector 300 may comprise a reflective optical beam smoke detector.

As shown in Fig. 3, the transmitter of the smoke detector 300 transmits (e.g. infra-red ("IR")) radiation through the window to the reflector 310. The radiation is then reflected back by the reflector 310 to the smoke detector 300 and received by the receiver through the window. However, in the case of a fire, smoke in the air may cause the (IR) radiation to become attenuated. If the intensity of the reflected light falls below a threshold value, the smoke detector 300 may activate an alarm to signal an emergency.

Thus, the smoke detector 300 may be configured to trigger an (e.g. fire or smoke) alarm when the receiver is unable to receive one or more signals from the transmitter. This may be the case when smoke prevents the receiver from receiving the one or more signals from the transmitter.

Although Fig. 3 shows a smoke detector 300 comprising a transmitter and a receiver, in other embodiments, the smoke detector 300 comprises only a transmitter or only a receiver. In these embodiments, the reflector 310 may be replaced with a complimentary transmitter or a receiver.

Thus, in embodiments, the smoke detector comprises a first housing having a first window, and a transmitter located within the first housing, and a second housing a second window, and a receiver located within the second housing. In this case, the transmitter is configured to transmit electromagnetic (IR) radiation to the receiver via the first and second windows, and the receiver is configured to receive the electromagnetic (IR) radiation from the transmitter via the first and second windows.

Fig. 4 shows schematically an optical beam smoke detector 300 in accordance with various embodiments. As shown in Fig. 4, the smoke detector 300 comprises a transmitter and/or receiver 320. The transmitter and/or receiver are located within a housing (not shown) of the smoke detector 300.

As shown in Fig. 4, the smoke detector 300 comprises a (self-regulating) heater 330, such as a positive temperature coefficient ("PTC") heating cable. The heater 330 may be disposed (at least in part) within the housing of the smoke detector and is configured to maintain a temperature difference between an interior of the housing and an exterior of the housing below a threshold temperature difference. For example, the heater 330 may be configured to automatically adjust heat output in response to a change (increase or decrease) in the temperature difference, i.e. so as to maintain the temperature within the housing at a desired (set-point) value.

The heater 330 may comprise a heating element, which may form part of a cable. The heater 330 may be configured such that when a current passes through the heating element, the heating element (and so the cable) emits heat. The amount of heat emitted by the heating element may depend on (may be proportional to) the current passing through the heating element, e.g. a greater current may give rise to greater heat output.

The heating element may be formed from a positive temperature coefficient material, i.e. a material that exhibits a positive resistance change in response to an increase in temperature. As the temperature of the material increases, the resistivity of the material also increases, limiting the current flow. In other words, the material allows current to flow at low temperatures, and restricts current flow as the temperature increases. Beneficially, this allows the heater 330 to act as its own sensor, eliminating the need for any external feedback controls.

In operation, self-regulating heaters initially draw full power to quickly heat up and reach a desired temperature. As the heat increases, the power consumption simultaneously drops. It will be therefore appreciated that the heater 330 may be operated, automatically, to draw only the current and/or power necessary to maintain a desired temperature, thereby reducing and/or optimising power consumption.

In various embodiments, the heater 330 is configured to heat the interior of the housing to the same temperature of the exterior of the housing. That is, the heater 330 is configured to (attempt to) maintain the temperature difference between the interior of the housing and the exterior of the housing at or close to zero.

The heater 330 may be configured to maintain the temperature difference below the threshold temperature difference by changing its heat output depending on the temperature external to the housing. Thus, the heater 330 may be configured to increase its heat output when the external temperature increases, and to decrease its heat output when the external temperature decreases (and to maintain its heat output when the external temperature remains constant). This is done in such a way to maintain the temperature difference between the interior of the housing and the exterior of the housing below the threshold temperature difference, e.g. so as to (attempt to) maintain the difference at or close to zero.

As described elsewhere herein, where the transmitter and receiver are located in separate housings, one or both of the housings may include a heater configured in this manner.

As shown in Fig. 4, the smoke detector 300 may further comprise a regulator 340. The regulator 340 may be configured to supply the (heating element of the) heater 330 with a voltage.

It will be appreciated that the voltage supplied by the regulator 340 will in effect set the heater to a desired operating temperature. For example, a greater supplied voltage will cause a greater current to flow and so a greater heat output. Thus, the regulator 340 may be configured to control the set operating temperature of the heater 330, i.e. by controlling the voltage supplied to the heater 330.

The smoke detector 300 may be configured such that, when it is desired for the heater 330 to maintain a constant temperature within the housing, the regulator 340 supplies the (heating element of the) heater 330 with a constant voltage. This will mean that the heater 300 will maintain a constant temperature within the housing.

The smoke detector 300 may be configured such that, when it is desired for the heater 330 to change the temperature within the housing, the regulator 340 changes the voltage supplied to the heater 330 so as to change the temperature of the heater 330. For example, the regulator 340 may be configured to increase the voltage supplied to the heater 330 so as to increase the operating temperature of the heater 330 (and so increase the temperature within the housing) and/or to decrease the voltage supplied to the (heating element of the) heater 330 so as to decrease the operating temperature of the heater 330 (and so decrease the temperature within the housing).

In various embodiments, the regulator 340 may comprise a buck boost regulator. The buck boost regulator may be configured to regulate the output voltage of the regulator 340 for input voltages to the regulator 340 both above and below the magnitude of the output voltage.

Thus, the regulator 340 may be configured such that the maximum output current of the regulator 340 is dependent upon the input voltage to the regulator 340. In other words, higher input voltages to the regulator 340 may yield a higher maximum output current of the regulator 340.

The regulator 340 may be configured to limit the maximum current that flows through the heating element. This may protect the regulator 340 and/or heater 330 against overload or short-circuit.

As shown in Fig. 4, the smoke detector 300 may further comprise a fan 360. The fan 360 may be disposed within the housing of the smoke detector 300 and may be configured to distribute heat (e.g. evenly) throughout the housing by producing a flow of (heated) air throughout the housing. Thus, the fan may be configured to distribute air throughout the housing of the smoke detector 300.

The provision of a fan has been found to be particularly advantageous for optical beam smoke detectors, since for example, the housing may have a relatively large volume, such that the heater 330 by itself may not be capable of providing a uniform temperature distribution throughout the whole of the housing. The use of a fan 360 is therefore particularly beneficial in providing a uniform temperature distribution throughout the interior of the housing, i.e. by generating air current(s) that distribute heat (e.g. evenly) throughout the housing

The smoke detector 300 may form part of a fire protection system 350, such as that shown in Fig. 1. In these embodiments, the regulator 340, fan 360 and/or the heater 330 may be powered by the fire protection system 350. For example, the fire protection system 350 may be configured such that the (regulator 340, fan 360 and/or the heater 330 of the) smoke detector 300 receives electrical power via the wiring of the fire protection system 350.

Alternatively, the smoke detector 300 may comprise an internal (independent) power source, such as a battery, and the regulator 340, fan and/or the heater 330 may be powered by the internal power source.

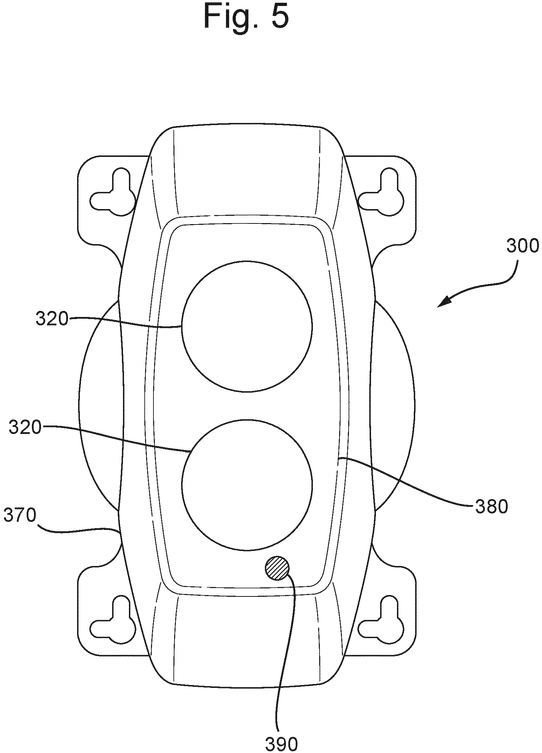

Fig. 5 shows schematically an optical beam smoke detector 300 in accordance with various embodiments. As shown in Fig. 5, the smoke detector 300 comprises a housing 370 having at least one window 380 therein.

The housing may be formed from any suitable material or combination of materials. Suitable materials include plastic, such as polycarbonate-ABS ("PC-ABS") or glass reinforced polyester ("GRP"), and metal, such as stainless steel, etc.

For example, the housing may comprise a plastic housing, a metal housing, or a housing comprising both plastic and metal. Metal is typically more resistant to changes in temperature (and so a metal housing can better isolate components within the housing from changes in temperature). It will be appreciated that this is particularly beneficial when it is desired to provide a smoke detector that is resistant to fire damage (i.e. fireproof). However, metal is also typically more expensive than plastic.

The window may be formed from any suitable material that is (at least partially) transparent (or translucent) to electromagnetic radiation (e.g. infra-red radiation). Suitable materials for the window include plastic, glass, crystal, etc.

In contrast, the housing may be formed from an opaque material. This may be such that electromagnetic radiation (e.g. infra-red radiation) can only enter (and leave) the interior of the housing via the window. The housing 370 may be sealed.

As shown in Fig. 5, the smoke detector 300 may comprise a temperature sensor 390. The temperature sensor 390 may comprise any suitable temperature sensor, such as for example a thermocouple. The temperature sensor 390 may be configured to measure the temperature of the environment external to the housing 370. To do this, the temperature sensor 390 may be located external to the housing 370, such as being disposed on an exterior surface of the housing 370.

The heat output of the heater 330 may be controlled or varied in response to an output of the temperature sensor 390. For example, the heater 330 may be configured to increase its heat output when the output of the temperature sensor 390 indicates that the temperature of the exterior of the housing 370 has increased. Equally, the heater 330 may be configured to decrease its heat output when the output of the temperature sensor 390 indicates that the temperature of the exterior of the housing 370 has decreased. The heater 330 may be configured to maintain its heat output when the output of the temperature sensor 390 indicates that the temperature of the exterior of the housing 370 remains constant. This is done in such a way to maintain the temperature difference between the interior of the housing 370 and the exterior of the housing 370 below the threshold temperature difference, e.g. so as to (attempt to) maintain the difference at or close to zero.

In particular embodiments, the smoke detector 300 is configured to adjust the set-point temperature of the heater 330 by (the regulator 340) adjusting the voltage supplied to the (heating element of the) heater 330 in response to the output of the temperature sensor 390. That is, the voltage supplied by the regulator 340 may be controlled or varied in response to the output of the sensor 390. For example, the regulator 340 may be configured to increase the voltage when the output of the sensor 390 indicates that the temperature difference of the exterior of the housing 370 has increased. Equally, the regulator 340 may be configured to decrease the voltage when the output of the sensor 390 indicates that the temperature of the exterior of the housing has decreased. The regulator 340 may be configured to maintain the voltage constant when the output of the sensor 390 indicates that the temperature of the exterior of the housing 370 remains constant. This is done in such a way to maintain the temperature difference between the interior of the housing 370 and the exterior of the housing 370 below the threshold temperature difference, e.g. so as to (attempt to) maintain the difference at or close to zero.

## Claims

1. A manual call point (MCP), comprising:
a housing;
a plurality of components located within the housing, wherein the plurality of components comprise a mechanism operable to trigger an alarm; and
a self-regulating heater, wherein the self-regulating heater is configured to maintain a temperature within the housing.

2. A manual call point as claimed in 1, wherein the housing comprises a metal housing, and wherein the heater is arranged to contact the metal housing.

3. A manual call point as claimed in claim 1 or 2, further comprising a metal plate located within the housing, wherein the heater is arranged to contact the metal plate.

4. An optical beam smoke detector, comprising:
a housing having a window;
a transmitter and/or a receiver located within the housing; and
a heater, wherein the heater is configured to maintain a temperature difference between an interior of the housing and an exterior of the housing below a threshold temperature difference.

5. A smoke detector as claimed in 4, wherein the heater comprises a self-regulating heater.

6. A smoke detector as claimed in claim 4 or 5, wherein the threshold temperature difference comprises a temperature difference less than 10°C.

7. A smoke detector as claimed in any of claims 4-6, further comprising a temperature sensor, wherein the sensor is configured to detect the temperature of an environment external to the housing.

8. A smoke detector as claimed in any of claims 4-7, further comprising a fan located within the housing, wherein the fan is configured to distribute heat throughout the interior of the housing.

9. A manual call point or smoke detector as claimed in any preceding claim, wherein the heater comprises a positive temperature coefficient (PTC) heater.

10. A manual call point or smoke detector as claimed in any preceding claim, further comprising a regulator configured to supply the heater with a voltage.

11. A manual call point or a smoke detector as claimed in claim 10, wherein the regulator comprises a buck boost regulator.

12. A manual call point or smoke detector as claimed in claim 10 or 11, wherein the regulator is configured to limit a maximum current provided to the heater.

13. A fire protection system comprising a manual call point and/or a smoke detector as claimed in any preceding claim.

14. A method of operating a manual call point (MCP) that comprises a plurality of components located within a housing, wherein the plurality of components comprise a mechanism operable to trigger an alarm, the method comprising:
using a self-regulating heater to maintain a temperature within the housing.

15. A method of operating an optical beam smoke detector that comprises a housing having a window, and a transmitter and/or a receiver located within the housing, the method comprising:
using a heater to maintain a temperature difference between an interior of the housing and an exterior of the housing below a threshold temperature difference.
